# EUROPEAN PATENT APPLICATION

(11) **EP 4 752 806 A1**
(43) Date of publication of application: **03.06.2026**
(21) Application number: 25219452.7
(22) Date of filing: 28.11.2025
(51) Int. Cl.: G06Q 10/20, H01M 8/00

(54) **INFORMATION PROCESSING DEVICE, INFORMATION PROCESSING METHOD, AND STORAGE MEDIIUM**

(30) Priority: 02.12.2024 JP 2024209407; 02.12.2024 JP 2024209421
(71) Applicant: Honda Motor Co., Ltd., Toyko 105-8404 (JP)
(72) Inventor: KAWAGOE, Norimasa, Saitama, 351-0193 (JP); YAMAMOTO, Akio, Saitama, 351-0193 (JP); NII, Daisuke, Aichi, 461-0004 (JP)
(74) Representative: Weickmann & Weickmann PartmbB

(57) **Abstract**

An information processing device (10) is equipped with an observation data acquisition unit (24) that acquires observation data (RD) of a deterioration index, which is an index related to deterioration of a vehicle, and a prior estimation data determination unit (30) that is capable of determining prior estimation data (PE) to be used in a data assimilation process in order to estimate the deterioration index by selecting, based on the observation data, from among a plurality of prior estimation data candidates (PEC) that are prepared in advance.

## Description

### BACKGROUND OF THE INVENTION

### FIELD OF THE INVENTION

The present disclosure relates to an information processing device, an information processing method, and a storage medium.

### DESCRIPTION OF THE RELATED ART

In JP 2024-010623 A, an information processing device is disclosed. The information processing device executes a data assimilation process based on an estimated value obtained by a predetermined physical property simulation, and a measured value obtained by preforming a measurement with respect to a substance. By performing such a data assimilation process, the information processing device generates a second estimated value.

### SUMMARY OF THE INVENTION

In light of the viewpoint of estimating a deterioration index of a vehicle, there is a need for a more satisfactory information processing device, a more satisfactory information processing method, and a more satisfactory storage medium.

The present disclosure has the object of solving the aforementioned problem.

A first aspect of the present disclosure is characterized by an information processing device equipped with an observation data acquisition unit configured to acquire observation data of a deterioration index, which is an index related to deterioration of a vehicle, and a prior estimation data determination unit configured to be capable of determining prior estimation data to be used in a data assimilation process in order to estimate the deterioration index, by selecting, based on the observation data, from among a plurality of prior estimation data candidates that are prepared in advance.

A second aspect of the present disclosure is characterized by an information processing device comprising a prior estimation data acquisition unit configured to acquire prior estimation data of a deterioration index, which is an index related to deterioration of a vehicle, an observation data acquisition unit configured to acquire observation data of the deterioration index; and a data assimilation processing unit configured to derive post estimation data of the deterioration index by executing a data assimilation process based on the prior estimation data and the observation data.

A third aspect of the present disclosure is characterized by an information processing method comprising an observation data acquisition step of acquiring observation data of a deterioration index, which is an index related to deterioration of a vehicle, and a prior estimation data determination step of allowing prior estimation data to be determined to be used in a data assimilation process in order to estimate the deterioration index, by selecting, based on the observation data, from among a plurality of prior estimation data candidates that are prepared in advance.

A fourth aspect of the present disclosure is characterized by an information processing method comprising a prior estimation data acquisition step of acquiring prior estimation data of a deterioration index, which is an index related to deterioration of a vehicle, an observation data acquisition step of acquiring observation data of the deterioration index, and a data assimilation processing step of deriving post estimation data of the deterioration index by executing a data assimilation process based on the prior estimation data and the observation data.

A fifth aspect of the present disclosure is characterized by a storage medium for causing a computer to execute the information processing method according to the third aspect of the present disclosure.

A sixth aspect of the present disclosure is characterized by a storage medium for causing a computer to execute the information processing method according to the fourth aspect of the present disclosure.

According to the present disclosure, in light of the viewpoint of estimating the deterioration index of a vehicle, a more satisfactory information processing device, a more satisfactory information processing method, and a more satisfactory storage medium are provided.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is a block diagram showing a configuration of an information processing device according to an embodiment;
FIG. 2A is a graph showing an example of traceability data, and FIG. 2B is a graph showing another example of the traceability data;
FIG. 3 is a schematic diagram showing a process of generating a plurality of prior estimation data candidates by a prior estimation data candidate generating unit;
FIG. 4 is a graph illustrating a plurality of estimation parameters that make up one of the prior estimation data candidates prior to correction thereof, and a plurality of observation parameters that make up observation data;
FIG. 5 is a graph illustrating a plurality of estimation parameters that make up one of the prior estimation data candidates after correction thereof, and a plurality of observation parameters that make up observation data;
FIG. 6 is a graph for describing a data assimilation process by a data assimilation processing unit;
FIG. 7 is a flowchart showing an information processing method according to an embodiment;
FIG. 8 is a flowchart showing a prior estimation data candidate generating method that is included in the information processing method;
FIG. 9 is a flowchart showing a deterioration index estimating method that is included in the information processing method; and
FIG. 10 is a block diagram showing a configuration of an information processing device according to Modification 1.

### DETAILED DESCRIPTION OF THE INVENTION

A data assimilation process is a process of deriving post estimation data based on prior estimation data, which is data derived (previously estimated) in advance by simulation or the like, and observation data, which is data observed by sensors or the like. In order to estimate a deterioration index of a vehicle by the data assimilation process, it is necessary to determine the prior estimation data of the deterioration index in advance by a prior estimation. The deterioration index of a vehicle is an index related to the deterioration of the vehicle. The deterioration index may be, for example, an index related to deterioration of a motive power source (a power plant) provided in the vehicle. The motive power source for the vehicle includes, for example, a fuel cell. More specifically, for example, the degree of deterioration of the electrolyte membrane of a fuel cell provided in a fuel cell vehicle (FCV: Fuel Cell Vehicle) (deterioration rate of the electrolyte membrane), the degree of deterioration of the catalyst layer that is bonded to the electrolyte membrane (deterioration rate of the catalyst layer), and the like, correspond to the deterioration index.

However, the degree of deterioration of a vehicle varies depending on the condition of usage of the vehicle that is used by the user who is the owner of the vehicle. Since the vehicle is generally used at the discretion of the user, the number of conditions of usage described above is enormous. Therefore, the number of simulation patterns for obtaining the prior estimation data of the deterioration index becomes enormous. In the case that a simulation is performed for such an enormous number of patterns, there has been a problem in that the processing load on the information processing device that executes the simulation becomes excessive.

The vehicle may also be equipped with various types of sensors. Due to these various types of sensors, it is possible to acquire information indicating various types of parameters (state quantities, physical quantities) related to the deterioration index of the vehicle. Those various types of parameters can be transmitted from the vehicle to a server device or the like as traceability data. By means of a machine learning model (a trained model) that has been trained beforehand to understand a relationship between the traceability data and the deterioration index of the vehicle, it is possible to estimate the deterioration index based on the traceability data that is sent from the vehicle. In this case, in order to achieve satisfactory estimation accuracy, the traceability data, which is input data, a certain degree of statistical reliability or stability is required. In this regard, for example, the traceability data obtained from a vehicle model (the vehicle) immediately after release thereof is often insufficient to ensure the statistical reliability or stability. From such a circumstance, it has been difficult to accurately estimate the deterioration index of the vehicle immediately after the release thereof.

Based on the foregoing preliminary explanation, hereinafter, an embodiment will be described.

A program (a computer program, computer software) in the following description may also be referred to as a computer program product. The computer program product is not limited to being a program that is recorded on a recording medium, but may also include a program that is transmitted, distributed, or downloaded via a network such as the Internet or the like.

In the following description, a target vehicle is a vehicle that serves as a target and for which a deterioration index thereof is estimated by a data assimilation process performed by a later-described information processing device (a data assimilation processing unit). In contrast thereto, a monitoring vehicle in the following description is a vehicle that provides to an information processing device (a user classification setting unit) data (traceability data) that is used in data clustering, which will be described later. The target vehicle and the monitoring vehicle differ from one another. The user of the target vehicle may be different from the user of the monitoring vehicle. In the following description, the user of the monitoring vehicle is also referred to as the monitoring user. In one embodiment, although a case is described in which the target vehicle and the monitoring vehicle are both FCVs (fuel cell vehicles), the target vehicle and the monitoring vehicle are not limited to being FCVs (see also the later-described exemplary modification).

### Embodiment

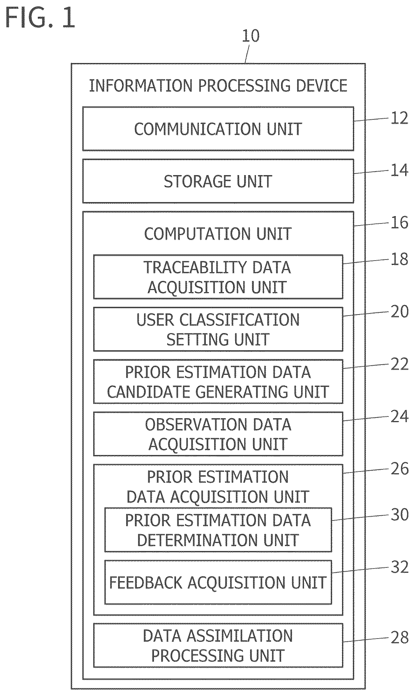

FIG. 1 is a block diagram showing a configuration of an information processing device 10 according to the embodiment.

The information processing device 10 is a device (a deterioration index estimation device, an estimation device) that uses the data assimilation process and thereby estimates the deterioration index of the target vehicle. The information processing device 10, for example, is included in an electronic device such as a computer or the like. The target vehicle is an FCV. The target vehicle, which is an FCV, is equipped with a fuel cell as a motive power source thereof. As noted previously, the deterioration index of the FCV, for example, is a degree of deterioration of an electrolyte membrane of the fuel cell, a degree of deterioration of a catalyst layer that is bonded to the electrolyte membrane, or the like. As shown in FIG. 1, the information processing device 10 is equipped with a communication unit 12, a storage unit 14, and a computation unit 16.

A non-illustrated communication module is included in the communication unit 12. The communication unit 12 carries out communications via a network. This network may include the Internet.

At least one recording medium, which is not illustrated, is included in the storage unit 14. For example, the storage unit 14 includes at least one non-volatile memory. The storage unit 14 may further include at least one volatile memory. At least a part of the storage unit 14 may be a portable recording medium. Such a portable recording media may include, but is not necessarily limited to being, a memory card, a USB (USB: Universal Serial Bus) flash memory, an optical disk, or the like.

A non-illustrated processing circuit (processing circuitry) is included in the computation unit 16. This processing circuit may include an IC (Integrated Circuit) or a discrete circuit. At least a part of the computation unit 16 may be a processor such as a CPU (Central Processing Unit) or a GPU (Graphical Processing Unit) or the like. The computation unit 16 may be one or more processors.

The computation unit 16 is equipped with a traceability data acquisition unit 18, a user classification setting unit 20, a prior estimation data candidate generating unit 22, an observation data acquisition unit 24, a prior estimation data acquisition unit 26, and a data assimilation processing unit 28. The traceability data acquisition unit 18, the user classification setting unit 20, the prior estimation data candidate generating unit 22, the observation data acquisition unit 24, the prior estimation data acquisition unit 26, and the data assimilation processing unit 28 are realized by the computation unit 16 (the processing circuitry). For example, at least one processor that is included in the computation unit 16 executes the program that is stored in the storage unit 14. In accordance with this feature, at least a part of the traceability data acquisition unit 18, the user classification setting unit 20, the prior estimation data candidate generating unit 22, the observation data acquisition unit 24, the prior estimation data acquisition unit 26, and the data assimilation processing unit 28 may be realized. The aforementioned IC or the discrete circuit may realize at least a part of the traceability data acquisition unit 18, the user classification setting unit 20, the prior estimation data candidate generating unit 22, the observation data acquisition unit 24, the prior estimation data acquisition unit 26, and the data assimilation processing unit 28.

The traceability data acquisition unit 18 acquires the traceability data of a vehicle (a target vehicle, a monitoring vehicle). The traceability data is transmitted from the vehicle. For example, a non-illustrated communication device is provided in the vehicle. The traceability data may also be transmitted from such a communication device. The traceability data acquisition unit 18, via the communication unit 12, is capable of acquiring the traceability data that is transmitted from the vehicle. The traceability data acquisition unit 18 may also acquire the traceability data via a predetermined server that accumulates the traceability data that is transmitted from the vehicle.

In the traceability data, there are included various types of information detected by various sensors that are provided in the vehicle. These various types of information may be information indicating various parameters (state quantities, physical quantities) related to the deterioration index. Such parameters related to the deterioration index, in the following description, are also referred to as deterioration related parameters. For example, an electrical current density (an output electrical current) of the fuel cell of the FCV, an operating pressure of the fuel cell, a hydrogen flow rate of the fuel cell, an air flow rate of the fuel cell, a voltage (an output voltage) of the fuel cell, a temperature of the fuel cell, and a humidity of the fuel cell can be influenced by the deterioration of the fuel cell. Accordingly, the output electrical current of the fuel cell of the FCV, the operating pressure of the fuel cell, the hydrogen flow rate of the fuel cell, the air flow rate of the fuel cell, the voltage of the fuel cell, the temperature of the fuel cell, and the humidity of the fuel cell can each be considered as deterioration related parameters. In this case, the traceability data may be data in relation to at least one from among the aforementioned output electrical current, the operating pressure, the hydrogen flow rate, the air flow rate, the voltage, the temperature, the humidity, and the like.

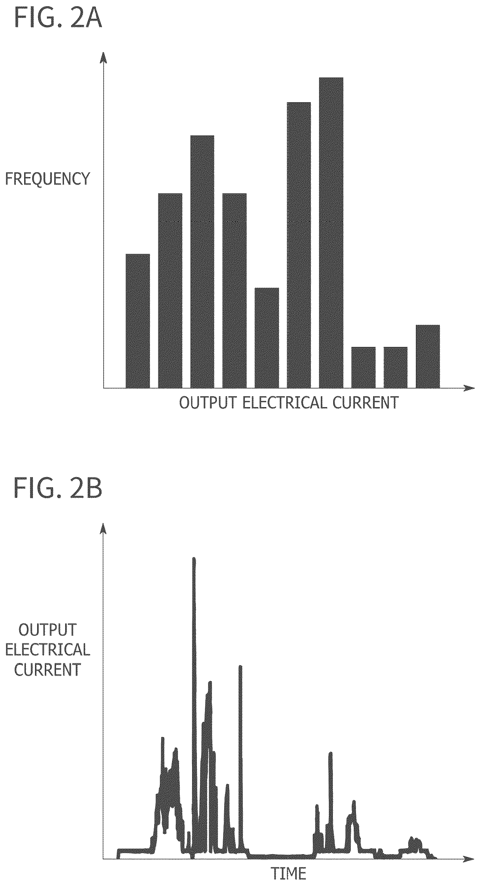

FIG. 2A is a graph showing an example of the traceability data.

The traceability data may be data related to a frequency distribution of the various types of deterioration related parameters. In that case, the traceability data represents, for example, the frequency of occurrence of respective values that the various types of deterioration related parameters can take over a predetermined period. The predetermined period, for example, is twenty four hours (one day), although the predetermined period is not necessarily limited to this value. The predetermined period may be, for example, seven days (one week) or a one time usage period during which the vehicle is used one time. The one time usage period of a vehicle is the period from when the ignition of the vehicle is turned ON (powered ON) until when the ignition of the vehicle is turned OFF (powered OFF). The traceability data acquisition unit 18 may acquire new traceability data every time that a predetermined period of time elapses. In FIG. 2A, a frequency distribution of the output electrical current of the fuel cell, which is one deterioration related parameter, is illustrated.

FIG. 2B is a graph showing another example of the traceability data.

The traceability data may be data related to a time-series change in the various types of deterioration related parameters. In that case, the traceability data represents, for example, the transition of the various types of deterioration related parameters over a predetermined period. The predetermined period may be one day, one week, or the one time usage period (as described above) of the vehicle, or the like, but it is not necessarily limited. In FIG. 2B, the time-series change in the output electrical current of the fuel cell is illustrated.

The user classification setting unit 20 sets a plurality of user classifications USR based on the traceability data that is obtained from each of a plurality of monitoring vehicles. For example, based on the traceability data obtained from each of the plurality of monitoring vehicles, the user classification setting unit 20 executes data clustering (clustering). In accordance therewith, the user classification setting unit 20 sets a plurality of user classifications USR (clusters) that differ from each other in terms of the condition of usage of the monitoring vehicle. Stated otherwise, the user classification setting unit 20, by executing the clustering based on the traceability data, sets a plurality of the user classifications USR that differ from each other in terms of the degree of deterioration of the vehicle.

The user classification setting unit 20, by using a clustering algorithm, which is an unsupervised machine learning algorithm, may execute the aforementioned clustering. The clustering algorithm that is used by the user classification setting unit 20, for example, is a non-hierarchical clustering algorithm such as k-means clustering or the like, although the clustering algorithm is not necessarily limited to this feature. For example, a hierarchical clustering algorithm may also be used by the user classification setting unit 20.

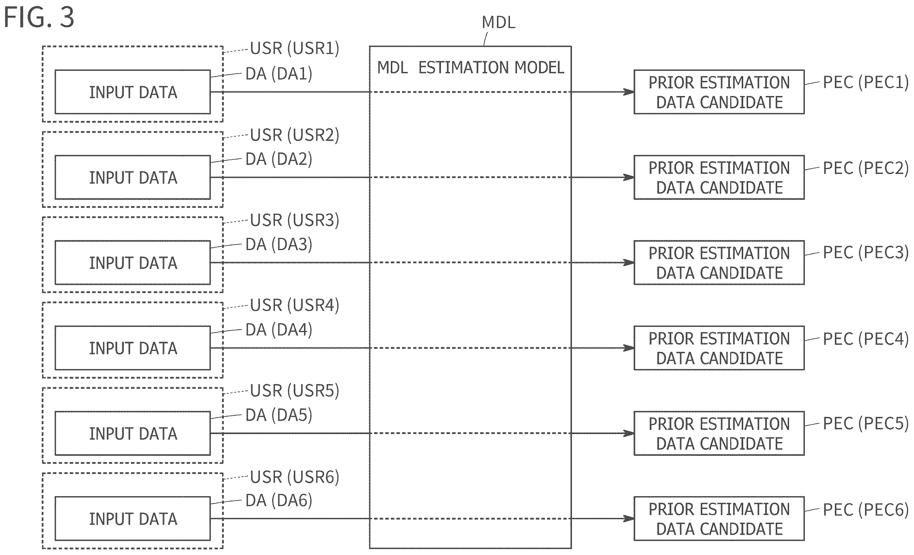

The number (an upper limit) of user classifications USR that can be set by the user classification setting unit 20 may be determined in advance. Such a predetermined number is an arbitrary natural number that is greater than or equal to two. For example, the predetermined number is six (refer also to FIG. 3), although the predetermined number is not necessarily limited to being this number. The user classification setting unit 20, based on the predetermined number which is determined in advance, is capable of setting a predetermined number of the user classifications USR (USR1 to USR6).

The user classification setting unit 20 may execute data processing as necessary as a pre-processing step for the aforementioned clustering. In that case, the user classification setting unit 20 may execute predetermined data processing as the pre-processing for the aforementioned clustering. For example, in the case that the traceability data is data in relation to a time-series change in the deterioration related parameters, the user classification setting unit 20 may process the data, and thereby generate data in relation to a frequency distribution (described previously) of the deterioration related parameters. In that case, the user classification setting unit 20 may execute clustering in which there is used data (traceability data after processing thereof) that is generated by way of data processing (predetermined data processing).

The prior estimation data candidate generating unit 22 generates a plurality of prior estimation data candidates PEC. Each of the plurality of prior estimation data candidates PEC is a candidate for prior estimation data PE that is used in the data assimilation process for estimating the deterioration index. The prior estimation data candidate generating unit 22 generates the prior estimation data candidates PEC corresponding to each of the plurality of user classifications USR that are set by the user classification setting unit 20. Accordingly, in the case that the number of the user classifications USR set by the user classification setting unit 20 is a predetermined number, the number of the prior estimation data candidates PEC that are generated by the prior estimation data candidate generating unit 22 is also a predetermined number. For example, in the case that the predetermined number is six, the prior estimation data candidate generating unit 22 generates six individual prior estimation data candidates PEC.

FIG. 3 is a schematic diagram showing a process of generating the plurality of prior estimation data candidates PEC by the prior estimation data candidate generating unit 22.

The prior estimation data candidate generating unit 22, by using an estimation model MDL, generates the plurality of prior estimation data candidates PEC. The estimation model MDL is a mathematical model that outputs estimation data of the deterioration index in accordance with the input data DA. The estimation model MDL is designed, for example, based on experiments. The estimation model MDL may be stored in the storage unit 14. The estimation data that is output may be data that indicates, by a probability distribution (a normal distribution), a plurality of predicted changes in the deterioration index. Moreover, the estimation model MDL may be a learning model (a trained model) obtained by machine learning such as supervised learning or the like.

Simulated traceability data can be used as the input data DA that is input to the estimation model MDL. The simulated traceability data is data in which the traceability data is simulated. For example, the simulated traceability data may represent a frequency distribution of at least one of the deterioration related parameters. In that case, the estimation model MDL outputs estimation data of the deterioration index in accordance with the frequency distribution of the at least one of the deterioration related parameters.

The simulated traceability data corresponding to the user classifications USR may be determined based on statistics of the traceability data of the monitoring vehicles that are owned by each of a plurality of monitoring users that belong to those user classifications USR. In this case, to ensure statistical reliability or stability, it is preferable to collect a sufficient amount of the traceability data of the monitoring vehicles. The simulated traceability data may be calculated by the prior estimation data candidate generating unit 22. The user of the information processing device 10, via a non-illustrated operation unit that is provided in the information processing device 10, may instruct the prior estimation data candidate generating unit 22 about the simulated traceability data. In such an operation unit, there may be included an input device such as a keyboard, a pointing device, or the like.

As the input data DA corresponding to the user classifications USR, there may be used the traceability data of a monitoring vehicle that is owned by one of the monitoring users belonging to that user classification USR. That one monitoring user may be selected by the prior estimation data candidate generating unit 22 randomly or based on a predetermined selection criterion. The user of the information processing device 10, via the non-illustrated operation unit (as described above) that is provided in the information processing device 10, may instruct the prior estimation data candidate generating unit 22 about the one of the monitoring users.

For example, in FIG. 3, there are shown a plurality of the input data DA (DA1 to DA6). Further, in FIG. 3, there are shown a plurality of the prior estimation data candidates PEC (PEC1 to PEC6).

The input data DA1, for example, is input data DA that is prepared according to a first user classification USR1. By inputting this input data DA1 into the estimation model MDL, a prior estimation data candidate PEC1 corresponding to the first user classification USR1 is obtained.

The input data DA2, for example, is input data DA that is prepared according to a second user classification USR2. By inputting this input data DA2 into the estimation model MDL, a prior estimation data candidate PEC2 corresponding to the second user classification USR2 is obtained.

The input data DA3, for example, is input data DA that is prepared according to a third user classification USR3. By inputting this input data DA3 into the estimation model MDL, a prior estimation data candidate PEC3 corresponding to the third user classification USR3 is obtained.

The input data DA4, for example, is input data DA that is prepared according to a fourth user classification USR4. By inputting this input data DA4 into the estimation model MDL, a prior estimation data candidate PEC4 corresponding to the fourth user classification USR4 is obtained.

The input data DA5, for example, is input data DA that is prepared according to a fifth user classification USR5. By inputting this input data DA5 into the estimation model MDL, a prior estimation data candidate PEC5 corresponding to the fifth user classification USR5 is obtained.

The input data DA6, for example, is input data DA that is prepared according to a sixth user classification USR6. By inputting this input data DA6 into the estimation model MDL, a prior estimation data candidate PEC6 corresponding to the sixth user classification USR6 is obtained.

The observation data acquisition unit 24 acquires observation data RD that is used in the data assimilation process for estimating the deterioration index. More specifically, the observation data acquisition unit 24 acquires the observation data RD of the deterioration index of the target vehicle.

The observation data RD of the deterioration index can be obtained based on the traceability data of the target vehicle. For example, based on various deterioration related parameters indicated by the traceability data of the target vehicle, the observation data acquisition unit 24 may calculate the observation data RD of the deterioration index of the target vehicle. In accordance with this feature, the observation data acquisition unit 24 is capable of acquiring the observation data RD of the deterioration index of the target vehicle.

The target vehicle, in the traceability data of the target vehicle, may include information indicating the deterioration index of the target vehicle. For example, an electronic device such as an ECU (Electronic Control Unit) or the like that is provided in the target vehicle may calculate the deterioration index of the target vehicle based on the output electrical current or the like of the fuel cell of the target vehicle. In that case, in accordance with the traceability data that includes information indicating the deterioration index being acquired by the traceability data acquisition unit 18, the observation data acquisition unit 24 is capable of extracting the deterioration index from the traceability data.

The prior estimation data acquisition unit 26 includes a prior estimation data determination unit 30. The prior estimation data determination unit 30, based on the observation data RD obtained from the target vehicle, determines the prior estimation data PE that is used in the data assimilation process to estimate the deterioration index of a target vehicle. More specifically, the prior estimation data determination unit 30, as described hereinafter, determines the prior estimation data PE.

The prior estimation data determination unit 30 compares the observation data RD acquired by the observation data acquisition unit 24 with each of the plurality of prior estimation data candidates PEC. In accordance with this feature, the prior estimation data determination unit 30 identifies from among the plurality of prior estimation data candidates PEC one of the prior estimation data candidates PEC for which the degree of deviation thereof from the observation data RD is smallest. In the case that a degree of deviation (a minimum degree of deviation) between the one of the prior estimation data candidates PEC that is identified in this manner and the observation data RD is less than a predetermined degree, the prior estimation data determination unit 30 determines as the prior estimation data PE the one of the prior estimation data candidates PEC.

As noted previously, the prior estimation data candidates PEC are estimation data of the deterioration index according to the estimation model MDL. The estimation data may be data that indicates, by a probability distribution, a plurality of predicted changes in the deterioration index. In this case, the degree of deviation between the prior estimation data candidates PEC and the observation data RD can be derived, for example, based on a comparison between a most frequent value in the probability distribution indicated by the prior estimation data candidates PEC and the deterioration index indicated by the observation data RD.

In the case that the minimum deviation degree is greater than or equal to a predetermined degree, the prior estimation data determination unit 30 corrects, based on the observation data RD, the one of the prior estimation data candidates PEC that was identified. In this case, the prior estimation data determination unit 30 determines as the prior estimation data PE the corrected one of the prior estimation data candidates PEC. The prior estimation data determination unit 30, for example as described hereinafter, corrects the one of the prior estimation data candidates PEC.

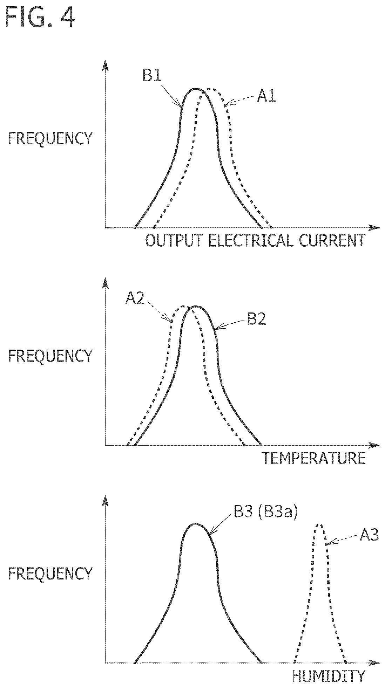

FIG. 4 is a graph illustrating a plurality of estimation parameters that make up one of the prior estimation data candidates PEC prior to correction thereof, and a plurality of observation parameters that make up the observation data RD.

In FIG. 4, a plurality of observation parameters (a frequency distribution), which are the plurality of deterioration related parameters that make up the observation data RD, are schematically shown by dashed lines. The plurality of observation parameters, for example, are made up from a first observation parameter A1 indicating the output electrical current of the fuel cell, a second observation parameter A2 indicating the temperature of the fuel cell, and a third observation parameter A3 indicating the humidity of the fuel cell. The plurality of observation parameters can be indicated by the traceability data that is used when the observation data RD is calculated by the aforementioned observation data acquisition unit 24.

Further, in FIG. 4, a plurality of estimation parameters (a frequency distribution), which are the plurality of deterioration related parameters that make up the prior estimation data candidates PEC prior to correction thereof are schematically shown by solid lines. The plurality of estimation parameters, for example, are made up from a first estimation parameter B1 indicating the output electrical current of the fuel cell, a second estimation parameter B2 indicating the temperature of the fuel cell, and a third estimation parameter B3 (B3a) indicating the humidity of the fuel cell. The plurality of estimation parameters are obtained by reusing as the plurality of estimation parameters at least a portion of the input data DA (the simulated traceability data, the traceability data) that is used when one of the prior estimation data PE is generated by the prior estimation data candidate generating unit 22.

The prior estimation data determination unit 30 compares each of the plurality of observation parameters with the estimation parameter corresponding to the deterioration related parameter. More specifically, the prior estimation data determination unit 30 compares the first observation parameter A1, which is a parameter related to the output electrical current of the fuel cell, with the first estimation parameter B1, which similar to the first observation parameter A1, is also a parameter related to the output electrical current of the fuel cell. Similarly, the prior estimation data determination unit 30 compares the second observation parameter A2 with the second estimation parameter B2. Further, the prior estimation data determination unit 30 compares the third observation parameter A3 with the third estimation parameter B3. In accordance with this feature, the prior estimation data determination unit 30 identifies the degree of deviation between each of the plurality of observation parameters and the estimation parameters corresponding to those observation parameters. The degree of deviation is determined, for example, based on the deviation between a most frequent value of the observation parameters and a most frequent value of the estimation parameters.

The prior estimation data determination unit 30 determines whether the degree of deviation specified for each of the plurality of observation parameters is less than a predetermined allowable degree. The predetermined allowable degree may be determined beforehand for each of respective pairs of observation parameters and the estimation parameters. In the case that an estimation parameter whose corresponding degree of deviation is greater than or equal to the predetermined allowable degree is identified by this determination, the prior estimation data determination unit 30 corrects that estimation parameter. More specifically, the prior estimation data determination unit 30 corrects the estimation parameter in a manner so that the degree of deviation, which was greater than or equal to the predetermined allowable degree, becomes less than the predetermined allowable degree. In accordance with this feature, the estimation parameter that is the target to be corrected is changed in a manner so that the estimation parameter indicates a value that is close to the corresponding observation parameter.

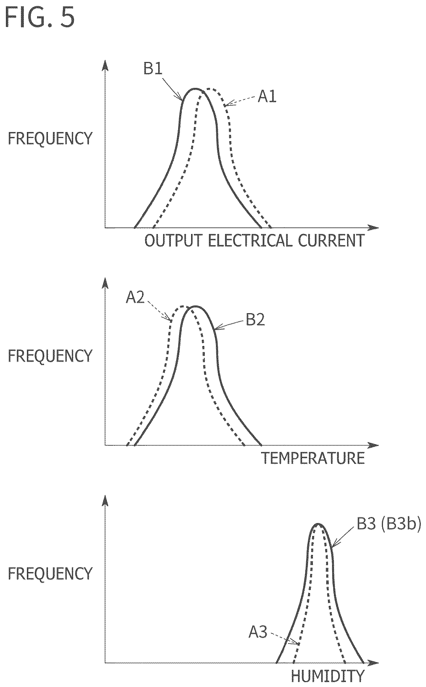

FIG. 5 is a graph illustrating a plurality of estimation parameters that make up one of the prior estimation data candidates PEC after correction thereof, and a plurality of observation parameters that make up the observation data RD.

For example, a case will be described in which the degree of deviation between the third observation parameter A3 and the third estimation parameter B3 shown in FIG. 4 lies within a predetermined allowable degree. In this case, the prior estimation data determination unit 30 corrects the third estimation parameter B3 in a manner so that the degree of deviation between the third observation parameter A3 and the third estimation parameter B3 is less than the predetermined allowable degree. For example, the prior estimation data determination unit 30 may shift the distribution of the third estimation parameter B3 along the horizontal axis in FIG. 5, until the most frequent value of the third estimation parameter B3 coincides with the most frequent value of the third observation parameter A3. In accordance with this feature, as shown in FIG. 5, the third estimation parameter B3 (B3b) after correction thereof is changed in a manner so as to exhibit a value (a distribution) that is close to the third observation parameter A3.

The prior estimation data determination unit 30 again derives the prior estimation data candidates PEC, based on the plurality of estimation parameters including the estimation parameters after correction thereof. In accordance with this feature, the prior estimation data candidates PEC (the prior estimation data candidates PEC after correction thereof) that are corrected based on the observation data RD are derived. The degree of deviation between the prior estimation data candidates PEC and the observation data RD after correction thereof can be suppressed, as compared with the degree of deviation between the prior estimation data candidates PEC and the observation data RD prior to correction thereof.

The prior estimation data acquisition unit 26 further includes a feedback acquisition unit 32. The feedback acquisition unit 32 acquires as the new prior estimation data PE the post estimation data ES of the deterioration index that is derived by the data assimilation processing unit 28. The data assimilation processing unit 28 will be described in more detail later.

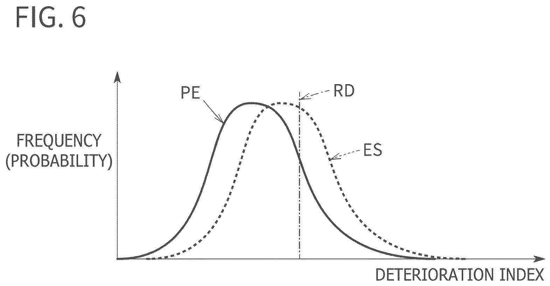

FIG. 6 is a graph describing the data assimilation process by the data assimilation processing unit 28.

The data assimilation processing unit 28 executes a data assimilation process based on the prior estimation data PE of the deterioration index acquired by the prior estimation data acquisition unit 26, and the observation data RD of the deterioration index acquired by the observation data acquisition unit 24. In accordance with this feature, the data assimilation processing unit 28 derives the post estimation data ES of the deterioration index. The data assimilation processing unit 28, by using a predetermined filter (a filtering process) such as a Kalman filter or an ensemble Kalman filter or the like, may execute the aforementioned data assimilation process.

The post estimation data ES that is derived by the data assimilation processing unit 28 may be data that indicates by means of a probability distribution (a normal distribution) the plurality of predicted changes in the deterioration index. In this case, the deviation between the most frequent value of the post estimation data ES and the observation data may be smaller than the deviation between the most frequent value of the prior estimation data PE and the observation data (refer also to FIG. 6).

The data assimilation processing unit 28 is capable of recursively (sequentially) deriving the post estimation data ES of the deterioration index. For example, the data assimilation processing unit 28, based on the prior estimation data PE determined by the prior estimation data determination unit 30 (the prior estimation data acquisition unit 26) and the observation data RD, is capable of deriving a first instance of the post estimation data ES of the deterioration index. The first post estimation data ES can be acquired, by the aforementioned feedback acquisition unit 32 (the prior estimation data acquisition unit 26), as new prior estimation data PE. In accordance with this feature, the data assimilation processing unit 28 is capable of further executing the data assimilation process, based on such new prior estimation data PE, and the observation data RD (the new observation data RD) that is newly acquired by the observation data acquisition unit 24. By means of such a data assimilation process, the data assimilation processing unit 28 is capable of deriving a second instance of the post estimation data ES, which is a new instance of the post estimation data ES. The second post estimation data ES can be acquired, by the aforementioned feedback acquisition unit 32, as new prior estimation data PE.

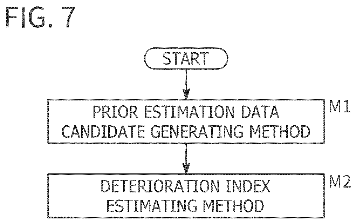

FIG. 7 is a flowchart showing an information processing method according to the embodiment.

The aforementioned information processing device 10 is capable of executing the information processing method shown in FIG. 7. For example, a processor that is provided in the information processing device 10, which is a computer, executes a predetermined program that is stored in the memory. In accordance therewith, the information processing device 10 executes the information processing method shown in FIG. 7. As shown in FIG. 7, the information processing method includes a prior estimation data candidate generating method M1, and a deterioration index estimating method M2.

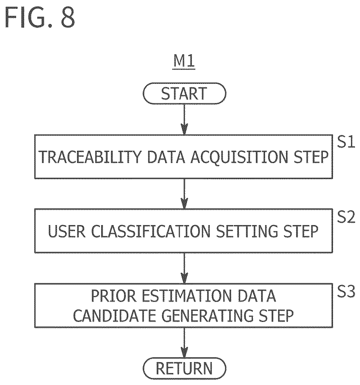

FIG. 8 is a flowchart showing the prior estimation data candidate generating method M1 that is included in the information processing method.

The prior estimation data candidate generating method M1 includes a traceability data acquisition step S1, a user classification setting step S2, and a prior estimation data candidate generating step S3.

In the traceability data acquisition step S1, the traceability data acquisition unit 18 acquires the traceability data of a plurality of the monitoring vehicles.

In the user classification setting step S2, based on the plurality of traceability data acquired in the traceability data acquisition step S1, the user classification setting unit 20 sets the plurality of user classifications USR.

In the prior estimation data candidate generating step S3, the prior estimation data candidate generating unit 22 generates the plurality of prior estimation data candidates PEC corresponding to each of the plurality of user classifications USR that were set in the user classification setting step S2.

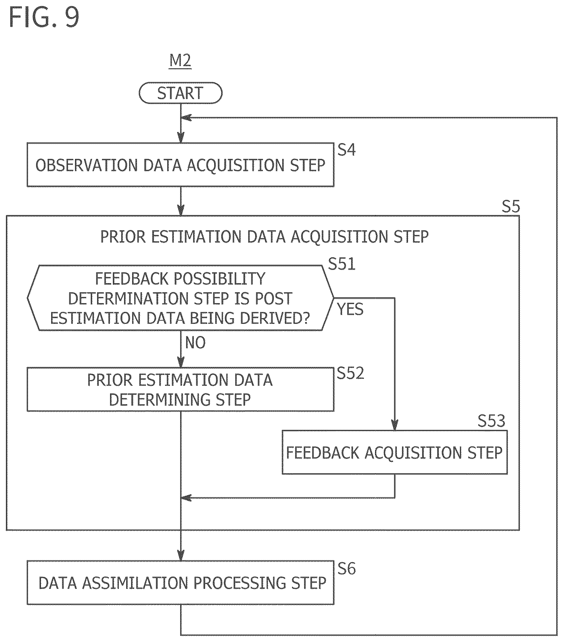

FIG. 9 is a flowchart showing the deterioration index estimating method M2 contained within the information processing method.

The deterioration index estimating method M2 includes an observation data acquisition step S4, a prior estimation data acquisition step S5, and a data assimilation processing step S6.

In the observation data acquisition step S4, the observation data acquisition unit 24 acquires the observation data RD of the deterioration index of the target vehicle. In the observation data acquisition step S4, together with the traceability data acquisition unit 18 acquiring the traceability data of the target vehicle, the observation data acquisition unit 24 may acquire the observation data RD of the target vehicle based on the traceability data.

In the prior estimation data acquisition step S5, the prior estimation data acquisition unit 26 acquires the prior estimation data PE to be used in the next data assimilation processing step S6. The prior estimation data acquisition step S5 includes a feedback possibility determination step S51, a prior estimation data determination step S52, and a feedback acquisition step S53. Although the details thereof will be described later, by the data assimilation processing step S6 being executed, the post estimation data ES of the deterioration index is derived. In the feedback possibility determination step S51, the prior estimation data acquisition unit 26 determines whether or not the post estimation data ES has been derived.

In the case that the post estimation data ES has not been derived (S51: NO), the prior estimation data determination step S52 is executed. In the prior estimation data determination step S52, the prior estimation data determination unit 30 (the prior estimation data acquisition unit 26) acquires, as the prior estimation data PE, the prior estimation data candidates PEC that were prepared in advance. More specifically, in the prior estimation data determination step S52, based on the observation data RD, the prior estimation data determination unit 30 selects one of the prior estimation data candidates PEC from among the plurality of prior estimation data candidates PEC. The one of the prior estimation data candidates PEC that was selected is determined as being the prior estimation data PE. More specifically, the one of the prior estimation data candidates PEC that was selected is acquired as the prior estimation data PE.

In the data assimilation processing step S6, based on the observation data RD and the prior estimation data PE, the data assimilation processing unit 28 executes a data assimilation process. In accordance with this feature, in the data assimilation processing step S6, the post estimation data ES of the deterioration index is derived.

After the data assimilation processing step S6 has been completed, the observation data acquisition step S4, the prior estimation data acquisition step S5, and the data assimilation processing step S6 can be repeatedly executed. Due to the data assimilation processing step S6 having been executed one time, in the aforementioned feedback possibility determination step S51, it is determined that the post estimation data ES has been derived (S51: YES). Therefore, after the data assimilation processing step S6 has been completed, the feedback acquisition step S53 may be executed.

In the feedback acquisition step S53, the feedback acquisition unit 32 (the prior estimation data acquisition unit 26) acquires the post estimation data ES as a new prior estimation data PE. In this case, the observation data acquisition step S4 may be executed at the aforementioned predetermined period. For example, in the case that the predetermined period is one day, the observation data RD, which is acquired based on the traceability data for an nth day, may be acquired in an nth observation data acquisition step S4 (where n is a natural number). In that case, in an (n+1)th observation data acquisition step S4, new observation data RD based on the traceability data for the (n+1)th day is acquired.

The above-described information processing device 10, for example, is capable of realizing the following advantageous effects.

The information processing device 10 is equipped with the prior estimation data determination unit 30. The prior estimation data determination unit 30 selects the prior estimation data PE to be used in the data assimilation process in order to estimate, based on the observation data RD, the deterioration index from among the plurality of the prior estimation data candidates PEC. In accordance with this feature, the information processing device 10 is capable of using the one of the prior estimation data PE that was selected, and thereby executing the data assimilation process. As a result, since the need to execute a simulation for a huge number of patterns is reduced, the processing load on the information processing device 10 can be suppressed.

The prior estimation data determination unit 30 selects as the prior estimation data PE one from among the plurality of prior estimation data candidates PEC for which the degree of deviation thereof from the observation data RD is smallest. In accordance with this feature, the accuracy of estimating the deterioration index by the data assimilation process is quickly improved. Further, in such a case, in the case that a degree of deviation between the one of the prior estimation data candidates PEC and the observation data RD is less than a predetermined degree, the prior estimation data determination unit 30 determines as the prior estimation data PE the one of the prior estimation data candidates PEC. On the other hand, in the case that a degree of deviation between the one of the prior estimation data candidates PEC and the observation data RD is greater than or equal to a predetermined degree, the prior estimation data determination unit 30 acquires the prior estimation data PE by correcting the one of the prior estimation data candidates PEC based on the observation data RD. In accordance with this feature, the accuracy of estimating the deterioration index by the data assimilation process is more quickly improved. Further, according to the present embodiment, the fact that the degree of deviation between the one of the prior estimation data candidates PEC and the observation data RD is greater than or equal to the predetermined degree serves as the condition for executing the process of correcting the one of the prior estimation data candidates PEC. Therefore, the frequency with which the correction is performed can be suppressed. As a result, the processing load on the information processing device 10 can be suppressed.

The prior estimation data candidates PEC are prepared corresponding to the plurality of user classifications USR for which the conditions of usage of the vehicles differ from each other. In accordance with this feature, the information processing device 10 is capable of selecting the prior estimation data PE according to the degree of deterioration of the vehicle, and of executing the data assimilation process. Therefore, according to the information processing device 10, the accuracy of estimating the deterioration index by means of the data assimilation process is satisfactory.

The information processing device 10 is equipped with the prior estimation data candidate generating unit 22. The prior estimation data candidate generating unit 22, by using an estimation model MDL, generates the plurality of prior estimation data candidates PEC. Knowledge obtained at a stage of designing the vehicle or the like can be reflected in the estimation model MDL. Accordingly, in the plurality of prior estimation data candidates PEC that are generated by the prior estimation data candidate generating unit 22, knowledge obtained during a stage of designing the vehicle or the like can be reflected.

The information processing device 10 is equipped with the user classification setting unit 20. The user classification setting unit 20 sets the plurality of user classifications USR based on the traceability data that is obtained from each of the plurality of monitoring vehicles. In accordance with this feature, the plurality of the user classifications USR can be set that satisfactorily reflect the differences in the conditions of usage of the vehicle.

The vehicle may be an FCV. Such an FCV is equipped with a fuel cell. In this case, the traceability data may be data relating to at least one of the output electrical current of the fuel cell, the operating pressure of the fuel cell, the hydrogen flow rate of the fuel cell, the air flow rate of the fuel cell, the voltage of the fuel cell, the temperature of the fuel cell, and the humidity of the fuel cell. In accordance with this feature, the deterioration index of the vehicle can be estimated as a degree of deterioration of the fuel cell of the vehicle (the FCV).

The information processing device 10 is equipped with the data assimilation processing unit 28. The data assimilation processing unit 28 executes the aforementioned data assimilation process based on the observation data RD and the prior estimation data PE, and thereby derives the post estimation data ES of the deterioration index. Provisionally, in the case that the deterioration index is estimated using only the observation data RD (the traceability data), in order to ensure statistical reliability or stability of the observation data RD, a certain amount of data is required to improve the estimation accuracy. In this regard, since the data assimilation processing unit 28 estimates the deterioration index by way of the data assimilation process using the prior estimation data PE, it is possible to realize a more satisfactory estimation accuracy at an earlier stage than in the case that the deterioration index is estimated using only the estimation data. Further, since the data assimilation processing unit 28 estimates the degradation index by way of the data assimilation process using the observation data RD, compared to a case in which the deterioration index is estimated by way of only a simulation, it is easier to obtain an estimation result that is more in line with the condition of usage of the user.

The prior estimation data acquisition unit 26 that is in the information processing device 10, based on the post estimation data ES that was derived by the data assimilation processing unit 28, is capable of acquiring new prior estimation data PE of the deterioration index. In this case, the data assimilation processing unit 28, by executing the data assimilation process based on the new prior estimation data PE and the new observation data RD acquired by the observation data acquisition unit 24, is capable of deriving the new post estimation data ES. In this manner, the information processing device 10 is capable of realizing the data assimilation process. In this case, since the result of the data assimilation process that has already been executed at the point in time when the new prior estimation data PE is acquired is reflected in the prior estimation data PE, the reliability of the new prior estimation data PE is satisfactory. Further, by repeatedly acquiring the observation data RD of the target vehicle, the statistical reliability or the stability of the observation data RD can be ensured. As a result, as the data assimilation process is repeated, the reliability of the post estimation data ES can be improved.

As noted previously, in the case that the post estimation data ES has not been derived by the data assimilation processing unit 28, the prior estimation data acquisition unit 26 (the prior estimation data determination unit 30) acquires as the prior estimation data PE the prior estimation data candidates PEC that were prepared in advance. In accordance with this feature, even in the case that the post estimation data ES cannot be fed back as the prior estimation data PE, the information processing device 10 is capable of executing the data assimilation process.

The one embodiment may be modified in the manner described below. Moreover, it should be noted that descriptions that overlap with those of the one embodiment will be omitted as appropriate below. Further, from among the configurations described below, the same reference numerals as in the one embodiment are used to designate the same configurations as those described in the one embodiment.

### Exemplary Modification 1

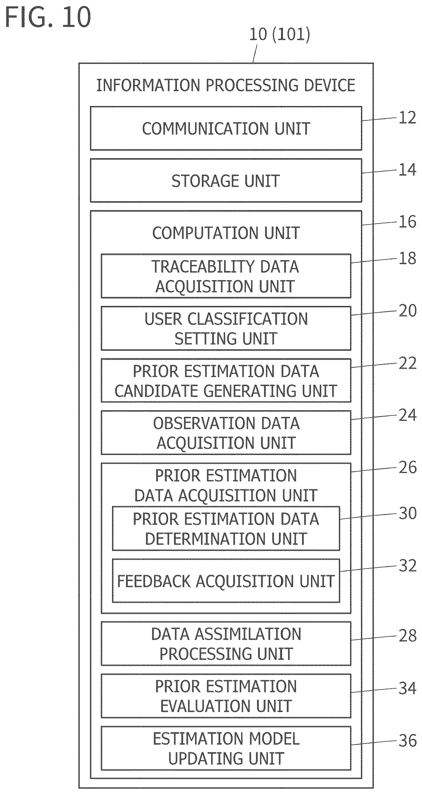

FIG. 10 is a block diagram showing a configuration of the information processing device 10 (an information processing device 101) according to an Exemplary Modification 1.

The information processing device 101 differs from the information processing device 10 (FIG. 1) of the embodiment, at least in that it further is equipped with a prior estimation evaluation unit 34 and an estimation model updating unit 36. The prior estimation evaluation unit 34 and the estimation model updating unit 36, similar to the traceability data acquisition unit 18, the user classification setting unit 20, and the like, are realized by a processing circuit (the computation unit 16).

The prior estimation evaluation unit 34 compares the first distribution and the second distribution. The first distribution is a probability distribution (a normal distribution) of the deterioration index that is obtained based on the plurality of observation data RD. The plurality of observation data RD, as the observation data acquisition step S4 is repeatedly executed, can be cumulatively stored in the storage unit 14. Based on the plurality of observation data RD, by a predetermined statistical process being executed, the first distribution is obtained. The second distribution that is compared with this first distribution is a probability distribution (a normal distribution) of the deterioration index indicated by the prior estimation data PE. The second distribution is indicated, for example, by the prior estimation data candidates PEC, which are selected as the prior estimated data PE by the prior estimation data determination unit 30. The prior estimation evaluation unit 34, only in the case that a predetermined execution condition is satisfied, may compare the first distribution with the second distribution. The prior estimation evaluation unit 34 may determine that the predetermined execution condition is satisfied, for example, in the case that the degree of deviation between the probability distribution of each of the plurality of estimation parameters, and the probability distribution of the observation parameters corresponding to the estimation parameters lies within an allowable range.

Based on whether or not the degree of deviation between the first distribution and the second distribution lies within the predetermined allowable range, the prior estimation evaluation unit 34 determines whether or not it is necessary to update the estimation model MDL. This estimation model MDL is a mathematical model that serves to generate the plurality of the prior estimation data candidates PEC (refer also to the one embodiment). The degree of deviation between the first distribution and the second distribution can be determined, for example, based on a comparison result between a most frequent value of the first distribution and a most frequent value of the second distribution. In the case that the degree of deviation between the first distribution and the second distribution lies within the allowable range, the prior estimation evaluation unit 34 determines that it is not necessary to update the estimation model MDL. In the case that the degree of deviation between the first distribution and the second distribution lies outside of the allowable range, the prior estimation evaluation unit 34 determines that it is necessary to update the estimation model MDL.

In the case that the prior estimation evaluation unit 34 determines that it is necessary to update the estimation model MDL, then based on the first distribution, the estimation model updating unit 36 updates the estimation model MDL. The estimation model updating unit 36 updates the estimation model MDL with the object of reducing the degree of deviation between the first distribution and the second distribution. In this case, the estimation model updating unit 36 may update the estimation model MDL, which is a mathematical model, by performing a regression analysis based on, for example, a least squares method.

The estimation model MDL may be a learning model (a trained model) obtained by machine learning. In that case, based on a machine learning algorithm that can be applied to supervised learning, the estimation model updating unit 36 may update the estimation model MDL. In that case, the first distribution may be used as training data.

According to the present exemplary modification, in the case that the second distribution, which is a probability distribution based on an estimation (the prior estimation data PE), deviates excessively with respect to the first distribution, which is a probability distribution based on the actual situation (the observation data RD), the estimation model MDL is corrected based on the actual situation. In accordance with this feature, using the estimation model MDL after updating thereof, the prior estimation data acquisition unit 26 is capable of obtaining more satisfactory prior estimation data PE in terms of the estimation accuracy. Further, according to the present exemplary modification, the estimation model MDL can be updated only in the case that a predetermined execution condition is satisfied, and further, the first distribution and the second distribution deviate excessively from one another. In the case that the degree of deviation between the probability distribution of each of the plurality of estimation parameters, and the probability distribution of the observation parameters corresponding to the estimation parameters lies within the allowable range, it can be determined that the predetermined execution condition has been satisfied. Even if the degree of deviation between the probability distribution of each of the plurality of estimation parameters and the probability distribution of the observation parameters corresponding to the estimation parameters lies within the allowable range, in the case that the first distribution and the second distribution deviate excessively from one another, the possibility is comparatively high that the estimation model MDL has not been properly constructed. More specifically, according to the present exemplary modification, in the case that the possibility is comparatively high that the estimation model MDL has not been properly constructed, the estimation model MDL can be updated.

In the case that the estimation model MDL is updated, the data assimilation processing unit 28 may use the prior estimation data PE estimated by the estimation model MDL after having been updated, and may thereby execute the data assimilation process. In accordance with this feature, the estimation accuracy of the data assimilation process can be improved.

### Exemplary Modification 2

The traceability data of the vehicle may be data related to at least one of a vehicle speed, an acceleration, and a usage time period of the vehicle. The usage time period is the time period from when the ignition of the vehicle is turned ON until when the ignition of the vehicle is turned OFF.

The information processing device 10, by using the traceability data related to the vehicle speed, the acceleration, and the usage time period, is capable of estimating the deterioration index of the vehicle related to the vehicle speed, the acceleration, and the usage time period. Further, the traceability data relating to the vehicle speed, the acceleration, and the usage time period can also be obtained from vehicle types other than FCVs. Therefore, according to the present exemplary modification, the information processing device 10 can also be applied to estimating the deterioration index of vehicles other than FCVs.

### Exemplary Modification 3

According to the one embodiment, the traceability data that is transmitted from the target vehicle may include information that indicates the deterioration index of the target vehicle. Similarly, the traceability data that is transmitted from the monitoring vehicles may include information indicating the deterioration index of the monitoring vehicles. In that case, the information indicating the deterioration index contained within the traceability data of the monitoring vehicles may be used for clustering by the information processing device 10 (the user classification setting unit 20).

### Combination of Plurality of the Exemplary Modifications

The above-described plurality of exemplary modifications may be appropriately combined within a range that is not contradictory or inconsistent.

In relation to the above-described embodiment, the following additional supplementary notes are described.

### Supplementary Note 1

The information processing device (10) according to the present disclosure is equipped with the observation data acquisition unit (24) that acquires the observation data (RD) of the deterioration index, which is an index related to the deterioration of the vehicle, and the prior estimation data determination unit (30) that is capable of determining the prior estimation data (PE) to be used in the data assimilation process in order to estimate the deterioration index by selecting, based on the observation data, from among the plurality of prior estimation data candidates (PEC) that are prepared in advance based on the observation data. In accordance with such a configuration, the data assimilation process is performed using the selected one of the prior estimation data. In accordance therewith, since the need to execute a simulation for a huge number of patterns is reduced, the processing load on the information processing device can be suppressed.

### Supplementary Note 2

In the information processing device according to Supplementary Note 1, the information processing device may be one in which the prior estimation data determination unit selects as the prior estimation data one of the prior estimation data candidates for which a degree of deviation thereof with respect to the observation data is smallest. In accordance with this feature, the accuracy of estimating the deterioration index by the data assimilation process is quickly improved.

### Supplementary Note 3

In the information processing device according to Supplementary Note 2, the information processing device may be one in which in the case that the degree of deviation between the one of the prior estimation data candidates and the observation data is less than a predetermined degree, the prior estimation data determination unit determines the one of the prior estimation data candidates as being the prior estimation data, and in the case that the degree of deviation between the one of the prior estimation data candidates and the observation data is greater than or equal to the predetermined degree, the prior estimation data determination unit acquires the prior estimation data by correcting the one of the prior estimation data based on the observation data. In accordance with this feature, the accuracy of estimating the deterioration index by the data assimilation process is more quickly improved.

### Supplementary Note 4

In the information processing device according to any one of Supplementary Notes 1 to 3, the information processing device may be one in which there is further provided the data assimilation processing unit (28) that derives the post estimation data (ES) of the deterioration index by performing the data assimilation process based on the prior estimation data and the observation data. In accordance with this feature, it is possible to realize satisfactory estimation accuracy from an early stage of operation of the vehicle.

### Supplementary Note 5

In the information processing device according to any one of Supplementary Notes 1 to 3, the information processing device may be one in which the prior estimation data candidates are prepared corresponding to a plurality of user classifications (USR) for which the conditions of usage of the vehicle are mutually different. In accordance with this feature, the information processing device is capable of selecting the prior estimation data according to the degree of deterioration of the vehicle, and of executing the data assimilation process.

### Supplementary Note 6

In the information processing device according to Supplementary Note 5, the information processing device may be one that is further equipped with the prior estimation data candidate generating unit (22) that generates the plurality of prior estimation data candidates, and the prior estimation data candidate generating unit, by an estimation in which an estimation model (MDL) is used, generates the prior estimation data candidates according to the conditions of usage of each of the plurality of user classifications. In accordance with this feature, knowledge obtained during a design stage or the like of the vehicle can be reflected in a plurality of the prior estimation data candidates.

### Supplementary Note 7

In the information processing device according to Supplementary Note 5, the information processing device may be one that is further equipped with the user classification setting unit (20) that sets the plurality of user classifications based on the traceability data obtained from the plurality of monitoring vehicles. In accordance with this feature, a plurality of the user classifications can be set that satisfactorily reflect the differences in the conditions of usage of the vehicle.

### Supplementary Note 8

In the information processing device according to Supplementary Note 7, the information processing device may be one in which the monitoring vehicle is a fuel cell vehicle equipped with a fuel cell, and the traceability data obtained from the monitoring vehicle is data regarding at least one of an output electrical current of the fuel cell, an operating pressure of the fuel cell, a hydrogen flow rate of the fuel cell, an air flow rate of the fuel cell, a voltage of the fuel cell, a temperature of the fuel cell, and a humidity of the fuel cell. In accordance with this feature, the deterioration index of the vehicle can be estimated as the degree of deterioration of the fuel cell.

### Supplementary Note 9

In the information processing device according to the present disclosure, the information processing device (10) may be one that is equipped with the prior estimation data acquisition unit (26) that acquires the prior estimation data (PE) of the deterioration index, which is an index related to deterioration of the vehicle, the observation data acquisition unit (24) that acquires the observation data (RD) of the deterioration index, and the data assimilation processing unit (28) that derives the post estimation data (ES) of the deterioration index by executing the data assimilation process based on the prior estimation data and the observation data. In accordance with this feature, it is possible for satisfactory estimation accuracy to be realized immediately after the vehicle has been released.

### Supplementary Note 10

In the information processing device according to Supplementary Note 9, the information processing device may be one in which the prior estimation data acquisition unit, based on the post estimation data that was derived by the data assimilation processing unit, acquires new prior estimation data of the deterioration index, and by executing the data assimilation process based on the new prior estimation data and the new observation data acquired by the observation data acquisition unit, the data assimilation processing unit causes new post estimation data of the deterioration index to be derived. In accordance with this feature, as the data assimilation process is repeated, the reliability of the post estimation data can be improved.

### Supplementary Note 11

In the information processing device according to Supplementary Note 9 or 10, the information processing device may be one in which, in the case that the post estimation data has not been derived by the data assimilation processing unit, the prior estimation data acquisition unit causes there to be acquired as the prior estimation data a prior estimation data candidate (PEC) that was prepared in advance. In accordance with this feature, the processing load on the information processing device can be suppressed.

### Supplementary Note 12

In the information processing device according to Supplementary Note 11, the information processing device may be one in which, in the case that the post estimation data has not been derived by the data assimilation processing unit, the prior estimation data acquisition unit is capable of determining the prior estimation data by selecting one from among a plurality of the prior estimation data candidates that were prepared in advance based on the observation data. In accordance with this feature, the processing load on the information processing device can be suppressed.

### Supplementary Note 13

In the information processing device according to Supplementary Note 12, the information processing device may be one in which the prior estimation data candidates are prepared corresponding to a plurality of user classifications (USR) for which conditions of usage of the vehicle are mutually different. In accordance with this feature, the information processing device is capable of selecting the prior estimation data according to the degree of deterioration of the vehicle, and of executing the data assimilation process.

### Supplementary Note 14

In the information processing device according to Supplementary Note 13, the information processing device may be one that is further equipped with the prior estimation data candidate generating unit (22) that generates the plurality of prior estimation data candidates, and the prior estimation data candidate generating unit, by an estimation in which an estimation model (MDL) is used, generates the prior estimation data candidates according to the conditions of usage of each of the plurality of user classifications. In accordance with this feature, knowledge obtained during a design stage or the like of the vehicle can be reflected in a plurality of the prior estimation data candidates.

### Supplementary Note 15

The information processing method according to the present disclosure is an information processing method that includes the observation data acquisition step (S4) of acquiring the observation data (RD) of the deterioration index, which is an index related to the deterioration of the vehicle, and the prior estimation data determination step (S52) of allowing the prior estimation data (PE) to be determined to be used in the data assimilation process in order to estimate the deterioration index by selecting, based on the observation data, from among the plurality of prior estimation data candidates (PEC) that are prepared in advance.

### Supplementary Note 16

The program according to the present disclosure is a program for causing the computer to execute the information processing method described in Supplementary Note 15.

### Supplementary Note 17

The information processing method according to the present disclosure may be an information processing method comprising a prior estimation data acquisition step (step S5) of acquiring prior estimation data (PE) of a deterioration index, which is an index related to deterioration of a vehicle, an observation data acquisition step (step S4) of acquiring observation data (RD) of the deterioration index, and a data assimilation processing step (step S6) of deriving post estimation data (ES) of the deterioration index by executing the data assimilation process based on the prior estimation data and the observation data.

### Supplementary Note 18

The program according to the present disclosure may be a program for causing the computer to execute the information processing method described in Supplementary Note 17.
An information processing device (10) is equipped with an observation data acquisition unit (24) that acquires observation data (RD) of a deterioration index, which is an index related to deterioration of a vehicle, and a prior estimation data determination unit (30) that is capable of determining prior estimation data (PE) to be used in a data assimilation process in order to estimate the deterioration index by selecting, based on the observation data, from among a plurality of prior estimation data candidates (PEC) that are prepared in advance.

## Claims

1. An information processing device (10), comprising:
an observation data acquisition unit (24) that acquires observation data (RD) of a deterioration index, which is an index related to deterioration of a vehicle; and
a prior estimation data determination unit (30) that is capable of determining a prior estimation data (PE) to be used in a data assimilation process in order to estimate the deterioration index by selecting, based on the observation data, from among a plurality of prior estimation data candidates (PEC) that are prepared in advance.

2. The information processing device according to claim 1, wherein the prior estimation data determination unit selects as the prior estimation data one of the prior estimation data candidates for which a degree of deviation thereof with respect to the observation data is smallest.

3. The information processing device according to claim 2, wherein in the case that a degree of deviation between the one of the prior estimation data candidates and the observation data is less than a predetermined degree, the prior estimation data determination unit determines the one of the prior estimation data candidates as being the prior estimation data, and
in the case that the degree of deviation between the one of the prior estimation data candidates and the observation data is greater than or equal to the predetermined degree, the prior estimation data determination unit acquires the prior estimation data by correcting the one of the prior estimation data based on the observation data.

4. The information processing device according to any one of claims 1 to 3, further comprising:
a data assimilation processing unit (28) that derives post estimation data (ES) of the deterioration index by performing the data assimilation process based on the prior estimation data and the observation data.

5. The information processing device according to any one of claims 1 to 3, wherein the prior estimation data candidates are prepared corresponding to a plurality of user classifications (USR) for which conditions of usage of the vehicle are mutually different.

6. The information processing device according to claim 5, further comprising:
a prior estimation data candidate generating unit (22) that generates the plurality of prior estimation data candidates, wherein the prior estimation data candidate generating unit, by an estimation in which an estimation model (MDL) is used, generates the prior estimation data candidates according to the conditions of usage of each of the plurality of user classifications.

7. The information processing device according to claim 5, further comprising:
a user classification setting unit (20) that sets the plurality of user classifications based on the traceability data obtained from the plurality of monitoring vehicles.

8. The information processing device according to claim 7, wherein the monitoring vehicle is a fuel cell vehicle equipped with a fuel cell, and the traceability data obtained from the monitoring vehicle is data regarding at least one of an output electrical current of the fuel cell, an operating pressure of the fuel cell, a hydrogen flow rate of the fuel cell, an air flow rate of the fuel cell, a voltage of the fuel cell, a temperature of the fuel cell, and a humidity of the fuel cell.

9. The information processing device, comprising:
a prior estimation data acquisition unit (26) that acquires prior estimation data (PE) of a deterioration index, which is an index related to deterioration of a vehicle;
an observation data acquisition unit (24) that acquires observation data (RD) of the deterioration index; and
a data assimilation processing unit (28) that derives post estimation data (ES) of the deterioration index by executing a data assimilation process based on the prior estimation data and the observation data.

10. The information processing device according to claim 9, wherein the prior estimation data acquisition unit, based on the post estimation data that has been derived by the data assimilation processing unit, acquires new prior estimation data of the deterioration index, and
by executing the data assimilation process based on the new prior estimation data and the new observation data acquired by the observation data acquisition unit, the data assimilation processing unit causes new post estimation data of the deterioration index to be derived.

11. The information processing device according to claim 9 or 10, wherein in the case that the post estimation data has not been derived by the data assimilation processing unit, the prior estimation data acquisition unit causes there to be acquired as the prior estimation data a prior estimation data candidate (PEC) that has been prepared in advance.

12. The information processing device according to claim 11, wherein in the case that the post estimation data has not been derived by the data assimilation processing unit, the prior estimation data acquisition unit is capable of determining the prior estimation data by selecting one from among a plurality of the prior estimation data candidates that have been prepared in advance based on the observation data.

13. The information processing device according to claim 12, wherein the prior estimation data candidates are prepared corresponding to a plurality of user classifications (USR) for which conditions of usage of the vehicle are mutually different.

14. The information processing device according to claim 13, further comprising:
a prior estimation data candidate generating unit (22) that generates a plurality of prior estimation data candidates, wherein the prior estimation data candidate generating unit, by an estimation in which an estimation model (MDL) is used, generates the prior estimation data candidates according to the conditions of usage of each of the plurality of user classifications.

15. An information processing method executed by one or more processors, comprising:
an observation data acquisition step of acquiring observation data (RD) of a deterioration index, which is an index related to the deterioration of a vehicle, and
a prior estimation data determination step of allowing prior estimation data (PE) to be determined to be used in a data assimilation process in order to estimate the deterioration index by selecting, based on the observation data, from among a plurality of prior estimation data candidates (PEC) that are prepared in advance.

16. A program for causing the one or more processors to execute the information processing method described in claim 15.

17. An information processing method executed by one or more processors, comprising:
a prior estimation data acquisition step (step S5) of acquiring prior estimation data (PE) of a deterioration index, which is an index related to deterioration of a vehicle,
an observation data acquisition step (step S4) of acquiring observation data (RD) of the deterioration index, and
a data assimilation processing step (step S6) of deriving post estimation data (ES) of the deterioration index by executing the data assimilation process based on the prior estimation data and the observation data.

18. A program for causing the one or more processors to execute the information processing method described in claim 17.
